# EUROPEAN PATENT SPECIFICATION

(11) **EP 1 813 583 B1**
(45) Date of publication and mention of the grant of the patent: **12.09.2012**
(21) Application number: 06380328.2
(22) Date of filing: 21.12.2006
(51) Int. Cl.: C04B 22/00, C04B 24/06, C04B 28/02, C04B 40/00, C04B 111/10, C04B 103/52

(54) **A process for the reduction of chromium (VI) in cements using an additive product**
Verfahren zur Reduzierung von Chrom (VI) in Zement mittels eines Zusatzmittels
Procédé pour la réduction du chrome (VI) aux ciments par un additif

(30) Priority: 27.01.2006 ES 200600186
(43) Date of publication of application: 01.08.2007
(73) Proprietor: Cementos Tudela Veguín, S.A., ES 33003 Oviedo Asturias (ES)
(72) Inventor: Egocheaga Rodriguez, Juan Carlos, 33005 Oviedo (ES); Timurovich Babaeb, Shakveran, 33011 Oviedo (ES); Cano Castro, Rufino, 33211 Gijon (ES)
(74) Representative: De Pablos Riba, Julio

(56) References cited:
- EP-A- 1 439 154
- EP-A- 1 505 045
- JP-A- 2004 051 424
- US-A1- 2005 109 243

## Description

### Object of the Invention

The present invention relates to a process for the reduction of chromium (VI) in cements. More specifically, the invention proposes the development of an additive which can be in a liquid or solid state and which can be added in any point of the cement production line (grinding, dispatching, etc.), for the purpose of achieving, at the time of its use, the reduction of the chromium (VI) contained in the clinker thereof to a value that is below the established legal limit.

The field of application of the invention is obviously comprised within the industrial sector dedicated to the manufacture of cements.

### Background and Summary of the Invention

The persons skilled in the art are aware of the current existence of certain rules limiting the content of chromium (VI) in cements to a value that is below a predetermined value. In this sense, the statute of limitations of European Directive 2003/53/EC, in force as of 17.01.2005, and its subsequent transposition into national laws, set a maximum content of soluble chromium (VI) in cements at a value of 0.0002 per cent (<2 ppm).

As is known, chromium is a trace element in the raw materials used in the manufacture of cement clinker. The oxidizing conditions of the furnace as well as the high alkalinity of the raw material mixture cause part of the chromium present therein to be converted into the toxic form of chromium VI. The European Scientific Committee on Toxicity, Ecotoxicity and the Environment has shown that the presence in cement of significant amounts of soluble chromium (chromium VI) can cause sensitization in the skin of some users, causing allergic eczemas, due to its high oxidation potential as well as to its easy water solubility.

In a parallel manner to the mentioned studies, processes have been experimented and patented in which when cement is mixed with water, a reducing agent added previously to the cement achieves converting soluble chromium VI to insoluble and therefore innocuous chromium III.

The REDOX behavior of chromates is based on their strong oxidized valence, therefore it is complicated to add an oxidizable compound allowing chromium to reach its trivalent state, the oxidation-reduction process basically being the one set forth below:

CrO₄²⁻ + 8H⁺ + 3e⁻ ↔ Cr³⁺ + 4H₂O

Cr₂O₇²⁻ + 14H⁺ + 6e⁻ ↔ 2Cr³⁺ + 7H₂O

This difficulty is greater considering that most conventional reducers work well in acid media (a mechanism expressed in the previous reaction), but not with as much effectiveness or even none at all in strong alkaline media, as is the case of cement and its derivatives. The oxidation power is high in acidic or very acidic solutions, whereas it is very complicated as the pH increases to alkaline values, which occurs when working with a cement matrix (pH 12 - 14).

The reducers usually used in the cement industry are compounds or preparations based on iron II sulfate and given the conditions set forth previously (high alkalinity and high oxidizing power of chromium VI), they have been shown as not very effective both in time and in the temperature intervals in which they can work without decomposing. The following example shows the reason for which a long-lasting and sufficient reduction of chromates with iron II ions is not achieved:
a) Equilibrium reaction: Fe²⁺ ↔ Fe³⁺ + e⁻
b) Idem for Cr: 2Cr³⁺ + 7H₂O ↔ Cr₂O₇ ²⁻ + 14H⁺ + 6e⁻

This explains why Cr⁶⁺ appears again in stored cements after a few months.

To the applicant's knowledge, including iron II sulfate and its derivatives, several patent registrations intended for the reduction of hexavalent chromium in cement have been found and are included in the following table:

| **Year** | **Patent** | **Reducing agent** |
|---|---|---|
| 1982 | US-4572739 | FERROMEL 20. Granulated ferrous sulfate, with a protective film against oxidation |
| 1984 | WO-9401942 | Ferrous sulfate heptahydrate-dried at 20-60 °C |
| 1984 | WO-8400200 | Ferric gypsum |
| 1991 | JP-3205331 | Ferrous sulfate dosed to the prepared mixtures |
| 1991 | US-5362321 | Mn(II) compounds |
| 1994 | EP-0630869 | Lignosulfate (Ca, Na, Fe) dose to the mixing water |
| 1999 | EP-0934914 | Lignosulfate + Sn(II)salt de |
| 1999 | JP-11092193 | Barium chloride |
| 2001 | EP-1092690 | Thermally or mechanically treated ferric carbonates dosed to the furnace |
| 2002 | JP-2002060751 | Chelating agent + sulfates |
| 2002 | JP-2002274907 | By-product of the synthesis of acetylene + sulfur compound |
| 2003 | JP-2003260465 | Reduction en suspension by means of electric treatment |
| 2003 | JP-2003236520 | Mixture of sodium silicate with sulfate + ferrous chloride |
| 2003 | JP-2003236520 | Mixture of sodium silicate with sulfate + ferrous chloride |
| 2004 | DE-10257879 | Zn salts of the sulfate, chloride type |
| 2004 | EP-1533287 | Dispersion of tin sulfate and ferrous sulfate |
| 2005 | JP-2005112706 | Sulfites, bisulfites in artificial zeolites |
| 2005 | US-2005072339 | Amine-based, of the hydroxylamine and hydrazine type |
| 2005 | FR-2858612 | Tin II hydroxide in suspension mechanically stabilized and with pH greater than 2 |
| 2005 | US-2005166801 | Liquid additive based on tin II chloride + antioxidant and/or oxygen scavengers |
| 2005 | WO-2005076858 | Liquid additive based on tin II chloride or sulfate + antioxidants |
| 2005 | EP-1505045 | Iron II ions in the presence of citric and/or ascorbic acid |

Most European cement manufacturers have chosen the addition of ferrous sulfate in any of its variants, the REDOX mechanism of which is the following:

3FeSO₄ 7H₂O + CrO₄²⁻ + 3CaO <=> 3Fe(OH)₃↓ + Cr(OH)₃↓ + 2OH⁻ + 3SO₄ Ca

with dosage contents comprised between 0.3% and 0.6%, depending on the starting proportion of soluble chromium VI in cement.

However, this material has important drawbacks:
- its availability is variable;
- it needs an expensive dosage installation;
- it has little stability as regards its quality;
- it is highly corrosive with the installation;
- it is difficult to handle;
- it has a reduced efficiency, since an amount of the order of ten times the amount needed stoichiometrically for the reduction of chromium (VI) is added on average;
- it is oxidized easily, therefore its effectiveness in cement lasts briefly; this problem becomes more pronounced if it is added to the cement mills when the temperatures exceed 80 °C;
- a dosage error (i.e. an overdosage) can cause important alterations of the cement properties, especially in the setting times and in the mechanical strength, due to the presence of sulfate ions or even sulfuric acid in the copper variant.

Among the mentioned reducers, the Complutense University of Madrid, in its File Code: CAI-DD-001 /06-03, has carried out a comparative behavior study, finally concluding that the reducers with a better performance in the set of required properties were tin chloride and alkaline pyrosulfites. The reducers included in patent documents before 2003 were not included in this study.

Finally, they have also rejected SnCl₂ due to its hazardousness, its bad solubility and high prices, in addition to the fact that it incorporates chlorides in cement, which are always hazardous for the final use thereof given that they are included among the worst enemies of reinforced concrete.

On the other hand, in the course of the investigation, it has been shown that pyrosulfites do not work in an alkaline medium, because if the Danish test method (DS 1200) is used without carrying out a prior oxidation of the other components, the chromium present is masked when it is determined colorimetrically. But if the test is repeated carrying out the mentioned oxidation, the chromium present in the solution appears because it has not been reduced.

Considering the drawbacks of the current state of the art which have been commented above, the present invention has been developed for the manufacture and use of a chemical preparation which, added and homogenized in the cement, allows being dispatched from the factory with the guarantee that at the time of use the content of chromium (VI) is less than 2 ppm.

The basis of the investigation has consisted of finding a substance which can be oxidized, having a "reduction potential" less than that of CrO₄²⁻ (the form in which chromium VI is in cements and derivatives), for the purpose of en electron exchange occurring between them, taking into account that this process has the difficulty of having to take place in a strong alkaline medium.

The second determining factor has consisted of the fact that the found substance must not provide negative properties to the cement, not only in normal use conditions, but also in the event of an accident or contingency.

The third determining factor consists of the fact that the substance must be able to create a stable, manageable product with the cement, and which allows being dosed accurately.

The fourth determining factor consists of the fact that the manufactured product cannot be a greater health risk than that which is intended to be prevented.

The fifth determining factor consists of the fact that the product must have a technical cost that can be assumed.

The sixth conditioning factor has a secondary character. Given that grinding additives having the function of increasing the specific surface area of the manufactured product are generally used in the manufacture of cement, this last determining factor consist of producing a "polyfunctional additive" fulfilling the double mission of chromium VI reducer and "grinding coadjuvant" in the manufactured cement.

The present invention proposes the use of an industrial product based on antimony (III) and potassium tartrate, also denominated Tartox, which satisfies the previously detailed premises.

### Description of a Preferred Embodiment

As was set forth at the start of the description, the present invention proposes the use of an additive for the reduction of chromium VI in cements which can be in solid state or in liquid state.
**a) Solid additive.**- The installation for manufacturing the additive in solid state must consist of a mixer fed by two circuits having two (±0.5%) precision dosing mechanisms of which one must work in a range of about 250 times the other. The one of greater range will be intended for the active addition, of the type contemplated in EN 197-1, whereas the one of smaller range will be intended for Tartox. The relative properties of the addition with respect to the end product will be able to be chosen between 0 and 99%, the end dosage to be added to the cement mill having to be adapted to these properties, according to the subsequent development.
**b) Liquid additive.**- The installation for the manufacture of this additive must comprise a closed container with an energetic stirring device. The mentioned container can be fed by sufficient sealed and independent circuits which allow adding all the necessary components for manufacturing the product. The liquid additive is based on a solution, dispersion or suspension of antimony III potassium tartrate in water, glycol, or glycerin (or mixture of both) in proportions between 1-10% by weight of the total of the liquid additive.

Each of the components must be weighed with a ±0.5% precision, therefore it must have suitable dosing apparatuses, either individual dosing apparatuses or weighed by difference.

The operation mechanism of the invention, whichever the form in which it is used, consists of reducing (soluble) chromium VI which is present in the cement when the latter is mixed with water for its use, at which time the soluble chromium dissolves and can create problems in the skin of the operators when they come into contact with the wet cement.

By means of the above mentioned additive, chromium VI (which is soluble and is reduced to chromium III (insoluble)), thus eliminating the mentioned hazard. The formation of the insoluble species (Cr(OH)₃) happens from pH≈9. This pH level is easily achieved in a cement matrix given the high alkalinity thereof.

The precipitation reaction of the species Cr(OH)₃ is favored by the presence of Ca(OH)₂ which is formed in cement hydration reactions and favors the elimination of reduced chromium III.

The REDOX process for reducing chromium (VI) with antimony (III) in an alkaline medium is as follows:

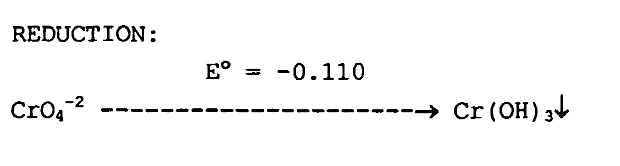

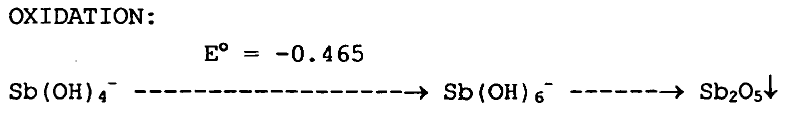

The use of the Sb (III) ion as an active ingredient of the invention is based on its extraordinary properties as a reducer in an alkaline medium where it works with great effectiveness in dosages that never exceed 5% of those stoichiometrically necessary for the reduction of chromium (VI) ions.

According to the data of the consulted literature, although other compounds could thermodynamically have this same reducing effect in an alkaline medium, it has been shown at a laboratory level that the kinetics of these reactions make them non-viable for their use as industrial preparations, given the effectiveness needed from the reducer has to be immediate and has to start the redox reaction as soon as it contacts all the species in the aqueous medium.

Antimony III potassium tartrate (tartar emetic or Tartox), a compound known since antiquity (medicinal uses for the treatment of fevers) and which is one of the most stable and at the same time very active forms in chemical reactions mainly of the redox type, has been chosen from the possible Sb (III) compounds which could have been used as an active ingredient according to the invention.

### 1. Solid preparation

The additive can be a solid preparation, in which case a homogeneous mixture is prepared as described in section a), where Tartox will be dosed in proportions comprised between 1 and 100% by weight together with the minor additions used in the EN 197-1 standard.

The minor additions can be any of those mentioned in the mentioned standard, it being recommendable that they not have substances that can be reduced and that can consume the additive before or during the purpose for which it is intended to be used.

For the purpose of preventing the negative effects caused by the presence of substances with a tendency to be reduced and therefore consume the active ingredient of the additive, antioxidants or antioxidant synergic substances can be added thereto. These antioxidants are added to the solid additive in proportions comprised between 1 and 15% by weight of the additive, improving the efficiency and duration thereof. Antioxidants slow down the oxidation reaction, but at the expense of themselves being destroyed. The result is that the use of antioxidants delays the oxidative alteration of the preparation, but it does not prevent it definitively. Those substances that are sometimes also called antioxidant synergic substances are located in this group and have an antioxidant action by a specific mechanism, the scavenging of trace amounts of metals present in the preparation. These trace amounts (mainly copper and iron) are found in the preparation naturally or can be incorporated therein during the processing and have a great effectiveness as oxidation reaction accelerators. Some of these additives can also have other functions, such as acidifiers or preservatives, whereas also other additives, the main function of which is different, have a certain antioxidant activity by this mechanism.

Sodium nitrite, sodium citrate and sodium potassium tartrate are examples of these antioxidant substances which can be included in the additive. In all cases they act as antioxidant synergic substances enhancing the reducing effect of the additive.

### 2. Liquid preparation

The additive can also be a liquid, the latter consisting of a solution of Tartox in water, glycol or glycerin, or mixtures of both. Said additive is prepared by dissolution, dispersion or suspension of the active element antimony III potassium tartrate in water, glycol or glycerin, or mixtures of both, the latter being in a proportion comprised between 1 and 10% by weight of the liquid additive.

In the preparation of said liquid additive, it must be endeavored that the solvent is above 25 °C so as to facilitate the solubility of the preparation to a great extent. The stability of the manufactured product improves if the containers in which it is to be stored until its final use are made of stainless steel or plastic, as well as if they are protected from the direct action of sunlight.

The liquid additive must have a pH comprised between 2 and 7, preferably between 3 and 5; to achieve these pH values, a weak organic acid can be added to necessary proportions so as to reach said pH level. The object of keeping the pH controlled and in these weak acidity values is to prevent the degradation of the product and increase the stability thereof in time. Acetic acid, citric acid, benzoic acid and sorbic acid are examples of the acids used for this purpose.

The use of an organic acid, although weak, must have the precaution of not being added in excessive amounts, because some properties of the cements to which they are incorporated are generally affected (especially setting times). The addition of acetic acid is recommended as the most effective acid, affecting the cement properties in a lesser degree.

The liquid additive can also be a polyfunctional additive, with the double mission as chromium VI reducer and grinding additive, achieving, in addition to the reduction of chromium, a synergistic effect as a grinding coadjuvant, increasing the specific surface area of the cements, or an increase in cement mills production. The preparation of this polyfunctional additive will be carried out by the dissolution, dispersion or suspension of the active element antimony III potassium tartrate in proportions of 1 to 10% by weight of the total of the additive in water to which one or more commercial grinding additives have been added in proportions comprised between 1 and 50% by weight of the total, preferably between 5 and 25% by weight of the total of the liquid additive. Examples of grinding additives useful for manufacturing the polyfunctional additive are those based on amines and alkanolamines, lignosulfates, acrylic acids and their salts. These additives have always been used in the cement industry and their effect is based on facilitating the disaggregation of the particles when the created surface electric charges are neutralized.

Other examples of grinding additives useful for manufacturing the polyfunctional additive are the most modern ones based on dispersants, surfactants, glycols, glycerols, hydroxylamine, hydrazine, polycarboxylates or mixtures thereof. The effects of these highly efficient additives that have been most recently used in the cement industry, are based on the previous properties as well as on preventing the formation of "coating", maintaining the efficiency of the load of the cement mill balls and improving the particle size distribution, preventing the formation of "superfine" cements, and have a powerful anticaking effect.

The stability of the reducing active ingredient (Tartox) can be improved in all the versions of the liquid additives with the addition of substances preventing its degradation. Said substances, of different natures and which will be denominated co-additives, can be antioxidants, antioxidant synergistic substances (metal scavengers or chelating agents), or liquid solution stabilizers.

The co-additives used are added to the preparation in proportion ranging from 0.2 to 15%, preferably from 0.3 to 8% by weight of the preparation. The addition of the co-additive is carried out by the dissolution, dispersion or suspension thereof in the formed liquid matrix, either by the solvent and Tartox, or by the solvent, the grinding additive and Tartox.

An example of the invention with the use of co-additives occurs when the liquid additive composition contains antioxidants: substances or preparations which, incorporated to the liquid additive containing antimony III potassium tartrate as reducing agent, make the undesirable oxidation effects occurring over time decrease, increasing the efficiency thereof. The substances act by slowing down the oxidation of the active ingredient since they are oxidized in the first place. Examples of these antioxidants are the incorporation of ascorbic acid, erythorbic acid, their sodium or potassium salts or mixtures of both.

Another example of the invention with the use of co-additives is when the liquid additive composition contains antioxidant synergistic substances: substances or preparations which, incorporated to the liquid additive containing antimony III potassium tartrate as reducing agent, have an antioxidant action by a specific mechanism, the scavenging of trace amounts of metal present in the preparation. These trace amounts (mainly copper and iron) can be found in the preparation as they are incorporated to the latter during the manufacture and processing, and have a great effectiveness as oxidation reaction accelerators. Examples of these antioxidant synergistic substances are the incorporation of citric acid, tartaric acid, their sodium potassium salts and the mixture of both hydrazine, hydroxylamine, the disodium salt of ethylenediaminetetraacetic acid (EDTA).

The reduction of chromium VI is enormously accelerated with the addition of EDTA and other electron vacancy trappers which can compete with re-oxidation processes, although this species, EDTA, is the most powerful antioxidant substance due to its high affinity to transition metals which may appear in the preparation and inhibit and can reduce the efficiency of the reducing additive.

Another example of the invention with the use of co-additives is when the liquid additive composition contains liquid solution stabilizers: substances or preparations which can provide from a preservative effect to the preparation to the stabilization of the liquid solution preventing segregations or homogeneity losses thereof. Examples of these stabilizers are the incorporation of sodium potassium sulfites, bisulfites and thiosulfates and mixtures of both. The addition of emulsifiers aiding to stabilize the preparation when the latter forms an emulsion which is difficult to work with is also contemplated, in which case these emulsifiers will be of the sodium or potassium oleate type or a mixture of both.

### EXAMPLE I

The additive based on antimony (III) potassium tartrate, in its solid and liquid (in aqueous solution) forms, is tested by joint grinding with Portland clinker in a laboratory cylpebs mill. From the obtained cement, the content of soluble chromium VI present therein is determined. The materials used in the laboratory and their proportions were the following: 95% clinker, 5% gypsum. The additive was added in different forms and dosages according to that set forth in Table I.

**Table I**

| Reducing agent | Additive ppm | Sb III-K tartrate ppm | S6 III ppm | ppm Cr VI clinker |
|---|---|---|---|---|
| Without reducer | - | - | - | 7 |
| 100% Solid additive | 100 | 100 | 36 | 1 |
| 100% Solid additive | 250 | 250 | 90 | <0.5 |
| 50% Solid additive | 400 | 200 | 75 | <0.5 |
| Liquid additive | 2500 | 125 | 45 | 1.5 |
| Liquid additive | 3000 | 150 | 54 | 1 |
| Liquid additive | 3500 | 175 | 65 | <0.5 |
| Liquid additive | 4000 | 200 | 75 | <0.1 |

With some of the antimony (III) potassium tartrate dosages used: 250 ppm, 200 ppm and 175 ppm, the values of chromium VI found were below the detection limits of the technique used to determine chromium VI, and have been generically expressed as <0.5 ppm.

With 50% solid additive (50% tartrate + 50% calcareous filler), the same efficiency is achieved with this same solid additive at 100%, but with a lower antimony (III) potassium tartrate dosage. These effects can be due to the fact that the dilution generated in the reducer aids in its better homogenization in the grinding process. The determination of chromium VI in parts per million (ppm) was carried out by VIS spectrophotometry from an aqueous extraction carried out with the cement. The extraction of chromium VI is carried out by aqueous suspension and stirring for 15 minutes, it is filtered and diphenylcarbazide is added to the obtained lixiviate, forming a purplish complex which is measured spectrophotometrically at 540 nm. The values of soluble chromium VI of the sample were obtained from the obtained results (absorbance measurement) taken to a previously made calibration curve.

### EXAMPLE II

To compare the present invention with those existing in the market, tests with different commercial reducers which were added to a same cement sample in different dosages were carried out. In all the cases, the reducing additives were added during the cement grinding process for the purpose of achieving a greater homogenization of the process, independently of whether the additive was added in solid or liquid state.

Table II lists the different used dosages of a liquid additive based on tin chloride (60% in solution).

Table III lists the dosages used with FeSO₄.7H₂O, a commonly used reducer in the cement industry.

Table IV lists the different used dosages of the additive of the invention based on antimony (III) potassium tartrate.

**Table II**

| Chromium VI reducing agent | Additive ppm | Sn II ppm | CEM I 42.5 R ppm Cr VI | CEM I 42.5 R2 months later |
|---|---|---|---|---|
| Without reducer | - | - | 7.8 | 7.7 |
| Liquid additive based on SnCl₂ (60%) | 196 | 80 | 5.5 | 6.9 |
| Liquid additive based on SnCl₂ (60%) | 330 | 130 | 4.1 | 5.7 |
| Liquid additive based on SnCl₂ (60%) | 460 | 180 | <0.5 | 3.7 |

**Table III**

| Chromium VI reducing agent | Additive ppm | Fe II ppm | CEM I 42.5 R ppm Cr VI | CEM I 42.5 ppm Cr VI 2 months later |
|---|---|---|---|---|
| Without reducer | - | - | 7.8 | 7.7 |
| Solid FeSO₄.7H₂O | 2000 | 400 | 2.6 | 4.9 |
| Solid FeSO₄.7H₂O | 3000 | 600 | 1.1 | 3.4 |
| Solid FeSO₄.7H₂O | 4000 | 800 | <0.5 | 3.3 |

**Table IV**

| Chromium VI reducing agent | Additive ppm | Sb III ppm | CEM I 42.5 R ppm Cr VI | CEM I 42.5 R 2 months later |
|---|---|---|---|---|
| Without reducer | - | - | 7.8 | 7.7 |
| 100% solid Sb III- K tartrate | 135 | 50 | 1.6 | 1.9 |
| 100% solid Sb III- K tartrate | 200 | 72 | <0.5 | 0.8 |
| 100% solid Sb III- K tartrate | 270 | 98 | <0.5 | <0.5 |

For the purpose of observing the efficiency of the different commercial additives over time and their comparison with respect to the present invention, after the grinding with the different additive and the determination of soluble chromium VI with the already mentioned methods, the sample is stored in sealed containers in the absence of oxygen (simulating a hypothetical stay in dispatching sacks). The content of chromium VI is then determined again two months after the addition of the reducing agents to the cement, considering that this time is reasonable for the useful life of cements without affecting any of its properties.

### EXAMPLE III

The efficiency of the reducer antimony (III) potassium tartrate is increased when the latter is added as a liquid solution. In this example, the additive is added as a liquid solution together with a commercial grinding additive (based on amines), the latter in a proportion not exceeding 20% by weight of the total of the additive. The dosages used and the results obtained in the determinations of chromium, both in the initial measurement and two months after the test are listed in table V below.

**Table V**

| Chromium VI reducing agent | Additive ppm | Sb III ppm | CEM I 42.5 R ppm Cr VI | CEM I 42.5 R 2 months later |
|---|---|---|---|---|
| Without reducer | - | - | 7.8 | 7.7 |
| 5% solid Sb III- K tartrate | 3000 | 54 | 0.6 | 1.2 |
| 5% solid Sb III- K tartrate | 4000 | 75 | <0.5 | 0.5 |
| 5% solid Sb III- K tartrate % | 5000 | 90 | <0.5 | <0.5 |

This example corresponds to an industrial test carried out in a ball mill of a cement factory in which the cement was ground with the addition of the additive in its polyfunctional variant (grinding coadjuvant + chromium VI reducer).

## Claims

1. A process for the reduction of chromium (VI) in cements to a level that is less than 2ppm, characterizes in that it comprises the step of adding an additive based on antimony (III) potassium tartrate (known as tartar emetic or Tartox) as an active ingredient to the cement at any point of the production or dispatching line.

2. The process according to claim 1, **characterized In that** the additive is in the solid state.

3. The process according to claim 1, **characterized in that** the additive is in the liquid state.

4. The process according to claim 1, **characterized in that** the additive is dosed in accurate amounts comprised between 5 and 500g of active ingredient / ton of cement for each ppm of initial chromium content in the cement which it to be reduced, its dosage in the cement being comprised in the range of 0,001 to 5%, and more preferably between 0,01 and 2% by weight in reference to dry matter.

5. The process according to claim 2, **characterized in that** the additive additionally includes one or more powdered antioxidants based on sodium nitrite, sodium or potassium citrate, sodium or potassium tartrate or sodium sulfite in amounts of 1 to 15 % by weight of the solid additive.

6. The process according to claim 3, **characterized in that** the additive comprises antimony (III) potassium tartrate which is solubilized, dispersed or suspended in a medium chosen from water, glycol, glycerine or a mixture of them, organic acids in proportions comprised between 1% and 10% by weight of the total of the solution.

7. The process according to claim 6, **characterized in that** the additive is solubilized, dispersed or suspended in the medium in proportions comprised between 2% and 8% by weight of the total of the solution.

8. The process according to claim 6 or 7, **characterized in that** the additive further comprises a grinding additive, the proportion of the grinding additive being comprised between 0 to 50% by weight of the total additive.

9. The process according to any of claims 6 to 8, **characterized in that** the additive has a pH value comprised between 2 and 7.

10. The process according to the claim 9, **characterized in that** the additive has a pH value comprised between 3 and 5.

11. The process according to claim 9 or 10, **characterized in that** the pH value is adjusted by the addition of one or more weak organic acids selected in the group consisting of acetic, citric, propionic, benzoic and sorbic acid.

12. The process according to any of claims 6 to 11, **characterized in that** the additive further comprises co-additives chosen from antioxidants, solution stabilizers, or mixtures thereof, the co-additives being added in dosed proportions comprised between 0,2 and 15% by weight of the total of the liquid additive.

13. The process according claim 8, **characterized in that** the grinding additive is a preparation based on one or several compounds selected in the group consisting of amine or alkanolamine, lignosulfates, acrylic acid or their salts.

14. The process according to claim 12, **characterized in that** the co-additives are selected in the group consisting of ascorbic acid, citric acid, erythorbic acid, ethylenediaminetetraacetic acid, tartaric acid and the alkaline salts thereof, the sterioisomers, or mixtures of the previous substances, as well as hydroxylamine, hydrazine, and its derivatives, sulfite, bisulfite, thiosulfate or mixtures thereof.

15. Use of antimony (III) potassium tartrate during cement production as an additive for reducing chromium VI in cements.

## Patentansprüche

1. Verfahren zur Reduzierung von Chrom (VI) im Zement bis zu einer Höhe unter 2 ppm, **dadurch gekennzeichnet, dass** es den Schritt des Zusetzens von einem Additiv auf der Basis von Antimon(III)-Kaliumtartrat (als Brechweinstein oder Tartox bekannt) als Wirkstoff zu dem Zement in jedem beliebigen Punkt der Produktions- oder Verteilungskette umfasst.

2. Verfahren nach Anspruch 1, **dadurch gekennzeichnet, dass** das Additiv in festem Zustand ist.

3. Verfahren nach Anspruch 1, **dadurch gekennzeichnet, dass** das Additiv in flüssigem Zustand ist.

4. Verfahren nach Anspruch 1, **dadurch gekennzeichnet, dass** das Additiv in exakten Mengen, welche zwischen 5 und 500 g Wirkstoff/Tonne Zement liegen, für jede zu reduzierende ppm von anfänglichem Chrom-Gehalt im Zement, dosiert wird, wobei seine Dosierung im Zement im Bereich von 0,001 bis 5 Gew.-%, und bevorzugterweise zwischen 0,01 und 2 Gew.-%, in Bezug auf die Trockenmasse, liegt.

5. Verfahren nach Anspruch 2, **dadurch gekennzeichnet, dass** das Additiv zusätzlich ein oder mehrere pulverförmige Antioxidationsmittel auf der Basis von Natriumnitrit, Natrium-oder Kaliumcitrat, Natrium- oder Kaliumtartrat oder Natriumsulfit in Mengen von 1 bis 15 Gew.-% des festen Additivs beinhaltet.

6. Verfahren nach Anspruch 3, **dadurch gekennzeichnet, dass** das Additiv Antimon(III)-Kaliumtartrat umfasst, aufgelöst, dispergiert oder suspendiert in einem Medium gewählt aus Wasser, Glykol, Glycerin oder einer Mischung derselben, in Mengenverhältnissen die zwischen 1 und 10 Gew.-% der gesamten Lösung liegen.

7. Verfahren nach Anspruch 6, **dadurch gekennzeichnet, dass** das Additiv im Medium aufgelöst, dispergiert oder suspendiert ist, in Mengenverhältnissen die zwischen 2 und 8 Gew.-% der gesamten Lösung liegen.

8. Verfahren nach Anspruch 6 oder 7, **dadurch gekennzeichnet, dass** das Additiv zusätzlich einen Zumahlstoff umfasst, wobei das Mengenverhältnis des Zumahlstoffes zwischen 0 und 50 Gew.-% des gesamten Additivs liegt.

9. Verfahren nach einem der Ansprüche 6 bis 8, **dadurch gekennzeichnet, dass** das Additiv einen pH-Wert aufweist, welcher zwischen 2 und 7 liegt.

10. Verfahren nach Anspruch 9, **dadurch gekennzeichnet, dass** das Additiv einen pH-Wert aufweist, welcher zwischen 3 und 5 liegt.

11. Verfahren nach Anspruch 9 oder 10, **dadurch gekennzeichnet, dass** der pH-Wert durch den Zusatz einer oder mehreren schwachen organischen Säuren, gewählt aus der Gruppe bestehend aus Essig-, Zitronen-, Propion-, Benzoe- und Sorbinsäure, eingestellt wird.

12. Verfahren nach einem der Ansprüche 6 bis 11, **dadurch gekennzeichnet, dass** das Additiv zusätzlich Co-Additive umfasst, gewählt aus Antioxidationsmitteln, Lösungsstabilisatoren, oder Mischungen derselben, wobei die Co-Additive in dosierten Mengenverhältnissen zugesetzt werden, welche zwischen 0,2 und 15 Gew.-% des gesamten flüssigen Additivs liegen.

13. Verfahren nach Anspruch 8, **dadurch gekennzeichnet, dass** der Zumahlstoff eine Zubereitung auf der Basis von einer o mehreren Verbindungen, gewählt aus der Gruppe bestehend aus Amin oder Alkanolamin, Lignosulfate, Acrylsäure oder dessen Salze, ist.

14. Verfahren nach Anspruch 12, **dadurch gekennzeichnet, dass** die Co-Additive aus der Gruppe gewählt werden, welche aus Ascorbinsäure, Zitronensäure, Isoascorbinsäure, Ethylendiamintetraessigsäure, Weinsäure und den Alkalisalzen derselben, den Stereoisomeren, oder Mischungen der vorstehenden Stoffen, sowie Hydroxylamin, Hydrazin und dessen Derivate, Sulfit, Bisulfit, Thiosulfat oder Mischungen derselben, besteht.

15. Verwendung von Antimon(III)-Kaliumtartrat während der Zementproduktion als Additiv zur Reduzierung von Chrom VI im Zement.

## Revendications

1. Procédé de réduction de chrome (VI) dans les ciments jusqu'à un niveau qui est inférieur à 2 ppm, **caractérisé en ce qu'**il comprend l'étape d'ajouter un additif basé sur le tartrate de potassium et antimoine (III) (connu comme tartre émétique ou Tartox) comme ingrédient actif au ciment à n'importe quel point de la ligne de production ou d'expédition.

2. Procédé selon la revendication 1, **caractérisé en ce que** l'additif est à l'état solide.

3. Procédé selon la revendication 1, **caractérisé en ce que** l'additif est à l'état liquide.

4. Procédé selon la revendication 1, **caractérisé en ce que** l'additif est dosé à des quantités précises comprises entre 5 et 500 g de l'ingrédient actif/tonne de ciment pour chaque ppm de contenu initial de chrome dans le ciment à réduire, son dosage dans le ciment étant compris dans l'intervalle de 0,001 à 5%, et plus préférablement entre 0,01 et 2% en poids par rapport à la matière sèche.

5. Procédé selon la revendication 2, **caractérisé en ce que** l'additive comporte, en outre, un ou plusieurs antioxydants en poudre basés sur le nitrite de sodium, le citrate de sodium ou de potassium, le tartrate de sodium ou de potassium ou le sulfite de sodium dans des quantités allant de 1 à 15% en poids de l'additif solide.

6. Procédé selon la revendication 3, **caractérisé en ce que** l'additif comprend du tartrate de potassium et antimoine (III) qui est solubilisé, dispersé ou suspendu dans un milieu choisi entre l'eau, le glycol, la glycérine ou un mélange de ceux-ci, dans des proportions comprises entre 1% et 10% en poids du total de la solution.

7. Procédé selon la revendication 6, **caractérisé en ce que** l'additif est solubilisé, dispersé ou suspendu dans le milieu dans des proportions comprises entre 2% et 8% en poids du total de la solution.

8. Procédé selon les revendications 6 ou 7, **caractérisé en ce que** l'additif comprend, en outre, un additif de broyage, la proportion de l'additif de broyage étant comprise entre 0 et 50% en poids de l'additif total.

9. Procédé selon l'une quelconque des revendications 6 à 8, **caractérisé en ce que** l'additif a une valeur de pH comprise entre 2 et 7.

10. Procédé selon la revendication 9, **caractérisé en ce que** l'additif a une valeur de pH comprise entre 3 et 5.

11. Procédé selon la revendication 9 ou 10, **caractérisé en ce que** la valeur de pH est ajustée par l'addition d'un ou plusieurs acides organiques faibles choisis dans le groupe constitué par l'acide acétique, citrique, propionique, benzoïque et sorbique.

12. Procédé selon l'une quelconque des revendications 6 à 11, **caractérisé en ce que** l'additif comprend, en outre, des co-additifs choisis parmi les antioxydants, les stabilisateurs de solution, ou des mélanges de ceux-ci, les co-additifs étant ajoutés dans des proportions dosées comprises entre 0,2 et 15% en poids du total de l'additif liquide.

13. Procédé selon la revendication 8, **caractérisé en ce que** l'additif de broyage est une préparation basée sur un ou plusieurs composés choisis parmi le groupe constitué par amine ou alcanolamine, les lignosulfates, l'acide acrylique ou leurs sels.

14. Procédé selon la revendication 12, **caractérisé en ce que** les co-additifs sont choisis parmi le groupe constitué par l'acide ascorbique, l'acide citrique, l'acide érythorbique, l'acide éthylène-diamine-tétraacétique, l'acide tartrique et les sels alcalins de ceux-ci, les stéréoisomères, ou les mélanges des substances précédentes, ainsi que l'hydroxylamine, l'hydrazine, et ses dérivés, le sulfite, le bisulfite, le thiosulfate ou leurs mélanges.

15. Utilisation de tartrate de potassium et antimoine (III) pendant la production de ciment comme additif pour réduire le chrome VI dans les ciments.
